Europäisches Patentamt

European Patent Office

Office européen des brevets

(19)

(11) **EP 0 832 683 A1**

(12) **EUROPÄISCHE PATENTANMELDUNG**

(43) Veröffentlichungstag:
01.04.1998 Patentblatt 1998/14

(51) Int. Cl.⁶: **B01J 2/16**, B01J 8/24

(21) Anmeldenummer: 97114546.1

(22) Anmeldetag: 21.08.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 26.09.1996 DE 19639579

(71) Anmelder:
Degussa Aktiengesellschaft
60311 Frankfurt (DE)

(72) Erfinder:
• Schütte, Rüdiger, Dr.
  63755 Alzenau (DE)
• Ruhs, Alexander, Dr.
  79618 Rheinfelden (DE)
• Pelgrims, Ivan
  2550 Kontich (DE)
• Klasen, Claas-Jürgen, Dr.
  63579 Freigericht (DE)
• Kaiser, Lothar
  63150 Heusenstamm (DE)

(54) **Verfahren und Vorrichtung zur Herstellung von Granulat mit periodisch oszillierender Korngrössenverteilung**

(57) Granulat mit periodisch oszillierender Korngrößenverteilung läßt sich durch kontinuierliche Wirbelschicht-Sprühgranulation erzeugen, indem Granulat mittels klassierend wirkender Austragsvorrichtung bei einem eine periodische Oszillation bewirkenden Flächenverhältnis des Zeitintegrais der Austragsfläche (f) aller Austragsvorrichtungen zur Bodenfläche der Wirbelschicht (F) austrägt. Durch Reduktion des Flächenverhältnisses f/F stellt sich die Oszillation ein; bei weiterer Reduktion nimmt die Amplituden-Schwenkung zu. Durch fraktionierende Granulatabnahme während einer Periode werden Fraktionen unterschiedlicher Korngrößenverteilung gewonnen.

EP 0 832 683 A1

**Beschreibung**

Die Erfindung richtet sich auf ein Verfahren zur Herstellung von Granulat mit periodisch oszillierender Korngrößenverteilung und Vorrichtung zu seiner Durchführung. Das Verfahren beruht auf einer Wirbelschicht-Sprühgranulation und gestattet es, quasi kontinuierlich zwei oder mehr Granulatfraktionen unterschiedlicher Korngrößenverteilung direkt aus der Granulation zu erhalten.

Für Hersteller von Granulaten besteht vielfach die Aufgabe, das Granulat mit jeweils auf den Anwendungszweck beziehungsweise den jeweiligen Abnehmer gerichteter spezifischer Korngrößenverteilung zur Verfügung zu stellen. Der Aufwand, ein Granulat in unterschiedlicher Korngrößenverteilung herzustellen ist erheblich, weil an die Granulatherstellung ein Verfahren zur Trennung des Granulats in verschiedene Fraktionen, etwa mittels aufwendiger Siebmaschinen, angeschlossen werden muß und/oder die Betriebsparameter bei der Granulatherstellung für jede gewünschte Korngrößenverteilung separat eingestellt werden müssen, was zu Anfahr- / Umstellungsproblemen sowie Minderqualitaten führen kann.

Für die Erzeugung von Granulaten bieten sich zahlreiche Verfahren an, etwa solche zur Aufbauagglomeration oder Pressagglomeration pulverförmiger fester Teilchen oder zur Wirbelschicht-Sprühgranulation, wobei flüssige Produkte wie Lösungen, Suspensionen und Schmelzen, in Granulate überführt werden. Mittels kontinuierlicher Wirbeischicht-Sprühgranulation, eine Übersicht über deren Prinzipien und den Aufbau geeigneter Vorrichtungen zur Wirbeischicht-Sprühgranulation vermittelt H. Uhlemann in Chem.-Ing.-Technik 62 (1990), 822-834, ist es möglich, die Granulatgröße sowie die Korngrößenverteilung in einfacherer Weise zu steuern als mittels anderer Verfahren. Die vorliegende Erfindung basiert daher auf der Wirbelschicht-Sprühgranulation. Für die Regelung der Korngrößenverteilung gilt aber auch bei der Wirbelschicht-Sprühgranulation, daß bei kontinuierlichem Betrieb zu einem stationären Zustand eine stoffabhängige Korngrößenverteilung gehört. Wenn unterschiedliche Verteilungen, insbesondere unterschiedliche mittlere Korngrößen ($d_{50}$) benötigt werden, müssen die Zustandsbedingungen entsprechend geändert werden. Dies geschieht in der Regel direkt oder indirekt über die Keimzahlbilanz, wobei je nach Stoff im stationären Betrieb obere und untere Grenzen der einstellbaren Korngrößenverteilung existieren. Zur Erzeugung eines relativ engen Kornspektrums mit einem bestimmten mittleren Korndurchmesser hat es sich bewährt, das Granulat mittels einer klassierenden Austragsvorrichtung aus der Wirbelschicht auszutragen.

Aufgabe der Erfindung ist, ein Verfahren aufzuzeigen, womit quasi kontinuierlich zwei oder mehr Granulatfraktionen mit unterschiedlicher Korngrößenverteilung erhalten werden können.

Die Aufgabe wird gelöst durch ein Verfahren zur Herstellung von Granulat mit periodisch oszillierender Korngrößenverteilung, das dadurch gekennzeichnet ist, daß man in einer Vorrichtung zur kontinuierlichen Wirbelschicht-Sprühgranulation Granulat erzeugt und dieses mittels einer oder mehreren klassierend wirkenden Austragsvorrichtungen bei einem eine periodische Oszillation der Korngrößenverteilung ermöglichenden Flächenverhältnis des Zeitintegrals der Austragsfläche (f) der einen oder mehreren Austragsvorrichtungen zur Bodenfläche der Wirbelschicht-Sprühgranulation (F) austrägt. Die weiteren Patentansprüche richten sich auf bevorzugte Ausführungsformen des Verfahrens sowie eine zur Durchführung des Verfahrens besonders geeignete Vorrichtung.

Es wurde festgestellt, daß sich in Vorrichtungen zur Wirbelschicht-Sprühgranulation mit klassierendem Granulataustrag in Abhängigkeit von der Häufigkeit, mit welcher die einzelnen Granulatteilchen am Sichtprozeß teilnehmen, überraschenderweise ein stationärer oszillierender Zustand einstellen läßt. Diese Oszillation tritt im stationären Betrieb ohne externe Störgröße auf. Der oszillierende Zustand läßt sich durch Reduzierung der Häufigkeit der Sichtung erzielen. Eine einfache Möglichkeit, die Häufigkeit der Sichtung zu reduzieren, besteht darin, das Flächenverhältnis des Zeitintegrals der Austragsfläche (f) aller Austragsvorrichtung(en) zur Bodenfläche (=Anströmboden) der Wirbelschicht (F) solange zu reduzieren, bis sich der oszillierende Effekt der Kornverteilung sowie des mittleren Korndurchmessers deutlich ausbildet. Das Flächenverhältnis f/F gibt ein Wahrscheinlichkeitsmaß für die Trefferhäufigkeit von Partikeln in die Austragsöffnung an. Hierbei sind insbesondere die folgenden Möglichkeiten von Bedeutung:

(i) Da die fluidisierenden Teilchen den Wirbelschichtraum immer durch eine Fläche verlassen, ist prinzipiell immer ein Flächenverhältnis für die Trefferhäufigkeit definierbar, etwa die Summe der Austragsöffnungen zur Bodenfläche der Wirbelschicht (F), wobei f gleich n • f' ist und n die Zahl der Öffnungen und f' die Fläche der einzelnen Öffnung bedeutet. Wenn Maßnahmen die Bewegungsbahn und/oder den Bewegungsraum der Teilchen beeinflussen, so wird letztlich nur der Kennwert des Flächenverhältnisses, bei dem eine oszillierende Wirkung auftritt, relativ verschoben.

(ii) Eine weitere prinzipielle Möglichkeit besteht darin, die Austragsöffnung zu digitalisieren, indem die Austragsöffnung z. B. pulsierend auf- und zugeschaltet wird. Vielfältig technische Lösungen sind denkbar, wobei diese immer auf das Prinzip hinauslaufen, die Verfügbarkeit der Austragsfläche (-öffnung) zeitlich zu begrenzen.

Bei der Ermittlung des wirksamen Flächenverhältnisses f/F durch orientierende Vorversuche sollte dafür Sorge getragen werden, daß in der Wirbelschichtapparatur keine Nesterbildung auftritt; dies ist zum Beispiel möglich durch Verwendung eines Anströmbodens mit gerichteter Luftströmung (z.B. Conidurboden), wodurch Überkorn in Richtung der Sichteröffnungen transportiert wird. Das Flächenverhältnis f/F läßt sich in einfacher Weise durch Verminderung der Zahl und/oder der Querschnittsfläche der Austragungsöffnungen (Sichteröffnung) reduzieren.

Ab einem bestimmten Flächenverhältnis f/F oszilliert der mittlere Korndurchmesser des am Sichteraustrag anfallenden Granulats mit einer regelmäßigen Periode zwischen einem Amplitudenmaximum und -minimum. Die Streuung der Korngrößenverteilung oszilliert phasenversetzt mit gleicher Frequenz. Die Frequenz der Schwingung hängt vom Durchsatz an Granulat, bezogen auf die Bodenfläche, ab; mit steigendem Durchsatz verkürzt sich die Periode bzw. erhöht sich die Frequenz. Je kleiner die Häufigkeit der Sichtung oder je kleiner das Flächenverhältnis f/F wird, desto größer wird die Differenz zwischen maximaler und minimaler Amplitude der mittleren Korngröße ($d_{50}$). Die Periodendauer kann bei großtechnischen Anlagen mehrere Stunden betragen, so daß es leicht möglich ist, bei im wesentlichen konstantem Durchsatz, entsprechend konstanter Sprührate, und konstanter Strömmungsmenge und Temperatur des Fluidisierungsgases, während einer Periode zwei oder mehr Fraktionen mit unterschiedlicher Korngrößenverteilung getrennt voneinander aus der oder den Austragsvorrichtungen abzunehmen.

Als Vorrichtung zur Wirbelschicht-Sprühgranulation mit klassierenden Austragsvorrichtungen kommen an sich bekannte Ausführungsformen infrage, beispielsweise solche gemäß dem zitierten Artikel von Uhlemann oder DE-Patent 195 14 187 oder EP-Patents 0 332 929. Der eigentliche Wirbelschichtapparat ist üblicherweise rund oder rechteckig. Anstelle einer einzigen sogenannten Fließrinne können auch mehrere rinnenartige Module parallel nebeneinander geschaltet sein. Als Vorrichtung zum klassierenden Austrag ist eine solche mit einer Gasstromsichtung (Gegenstrom-Schwerkraft-Sichter), etwa ein Steigrohrsichter oder Zick-Zack-Sichter, besonders geeignet. Bei einer rinnenförmigen Wirbelsschicht ist die Austragsvorrichtung vorzugsweise an einem Ende der Rinne angeordnet. Bei Verwendung einer derartigen Fließrinne liegt das Flächenverhältnis f/F im allgemeinen zwischen 5 ‰ und 0,1 ‰ (=5 · $10^{-3}$ bis 1 · $10^{-4}$), vorzugsweise zwischen 3 ‰ und 0,5 ‰.

Gemäß einer bevorzugten Ausführungsform des erfindungsgemäßen Verfahrens wird die Masse der Feststoffpartikel in der Wirbelschicht konstant gehalten. Bei Konstanthaltung des Über die Betthöhe der Wirbelschicht gemessenen Druckverlustes ist auch der Schichtinhalt annähernd konstant. Die Konstanthaltung gelingt bei einer Klassiervorrichtung mit Gasstromsichtung in einfacher Weise über den Durchsatz (Menge pro Zeiteinheit) an Klassiergas:

Während der Wachstumsphase wird die Klassiergasmenge erhöht; wenn die Partikeldurchmesser kleiner werden, etwa durch vermehrte interne Keimbildung, wird die Klassiergasmenge reduziert. Die Klassiergasmenge pro Zeiteinheit ist somit ein guter Indikator für den augenblicklichen Korndurchmesser des ausgetragenen Granulats. Aufgrund der langen Schwingungsdauer können damit die Perioden in Abhängigkeit von der Klassiergasmenge, in Zeitabschnitte zerlegt und der ausgetragene Granulatstrom entsprechend dem vorliegenden Band des Korndurchmessers einzelnen Fraktionen zugeleitet werden. Aus der Granulation werden damit quasi kontinuierlich fraktionierte Produktströme mit unterschiedlichem aber jeweils engerem Kornspektrum erhalten als dem integralem Gesamtspektrum über einen längeren Zeitraum entspricht.

Die Erzeugung des Granulats erfolgt in bekannter Weise, indem eine Lösung oder Suspension des zu granulierenden Stoffes auf in der Wirbelschicht befindliche Teilchen gesprüht und das Lösungsmittel verdampft wird. Anstelle einer Lösung können auch zwei jeweils einen Reaktionspartner enthaltende Lösungen eingesetzt werden, sofern die Trocknungszeit für die Reaktion ausreicht. Auch Schmelzen können erfindungsgemäß versprüht und in Granulate überführt werden. Schließlich ist es auch möglich, einen Reaktionspartner in Form einer Lösung zu versprühen und einen zweiten Reaktionspartner gasförmig dem Fluidisierungsgas zuzufügen.

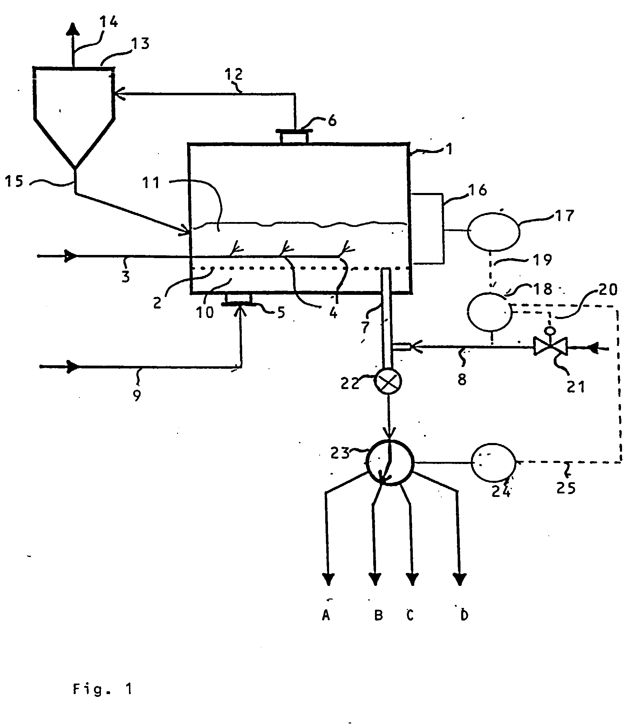

Die Erfindung wird anhand der Figuren 1 bis 3 verdeutlicht:

Figur 1 zeigt in schematischer Darstellung eine bevorzugte Vorrichtung zur Durchführung des erfindungsgemäßen Verfahrens. Die Vorrichtung umfaßt einen Wirbeischichtapparat (1) mit Anströmboden (2), eine Zuleitung (3) zu den Sprühdüsen (4), einen Zuluftstutzen (5) für die Fluidisierungsluft, einen Abluftstutzen (6) und eine klassierende Austragsvorrichtung, wovon ein Sichterrohr (7) mit einer Sichtergaszuleitung (8) gezeigt wird. Fluidisierungsluft (oder ein anderes Fluidisierungsgas) wird über eine Zuluftleitung (9) und den Zuluftstutzen (5) dem unter dem Anströmboden (2) befindlichen Windkasten (10) zugeführt. Der Windkasten kann auch durch Zwischenwände in mehrere Zonen, die jeweils mit einem eigenen Zuluftstutzen versehen sind, aufgeteilt sein (in der Figur nicht gezeigt). Bei Bedarf können auch innerhalb der Wirbeischicht mehrere Wehre angeordnet sein (nicht gezeigt). Die Fluidisierungsluft verläßt den Reaktor nach Durchströmen der Wirbelschicht (11) über einen Abluftstutzen (6) und gelangt über eine Leitung (12) in einen Staubabscheider (13); die vom Staub befreite Abluft entweicht über einen Stutzen (14), der abgeschiedene Staub kann über eine Leitung (15) wieder dem Reaktor zugeführt werden. Der Schichtinhalt wird über eine Differenzdruckmeßvorrichtung (16 mit 17) gemessen und mittels einer Meß- und Regelungsvorrichtung (18), die über eine Signalübertragung (19) mit der Druckmeßvorrichtung und über ein Verbindungskabel (29) mit einem Regelventil (21) für das Sichtergas verbunden ist, durch den Sichtergasdurchsatz konstant gehalten. Das über das Sichterrohr ausgetragene Granulat wird nach Passage einer Verschlußvorrichtung (22) einer Mehrwegweiche (23) zugeführt, womit der Granulatstrom in Fraktionen aufgeteilt wird - gezeigt sind die Wege A, B, C und D. Der Stellweg der Weiche wird über einen Rechenblock (24), der den Stellweg der Weiche in Abhängigkeit vom Mengenstrom des Sichtergases ermittelt, über eine Signalübertragung (25) mit der Meßvorrichtung für den Sichtergasstrom (Bestandteil von 18) verriegelt.

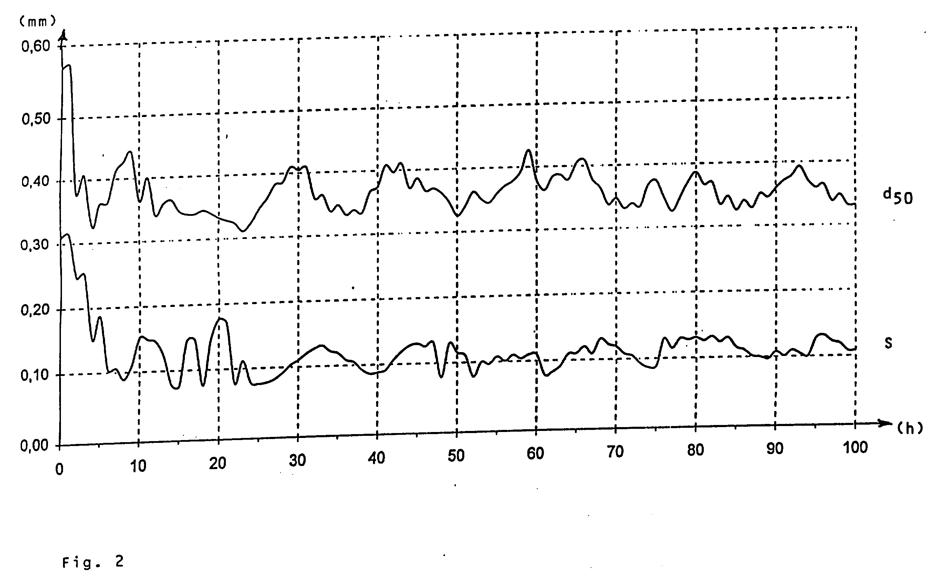

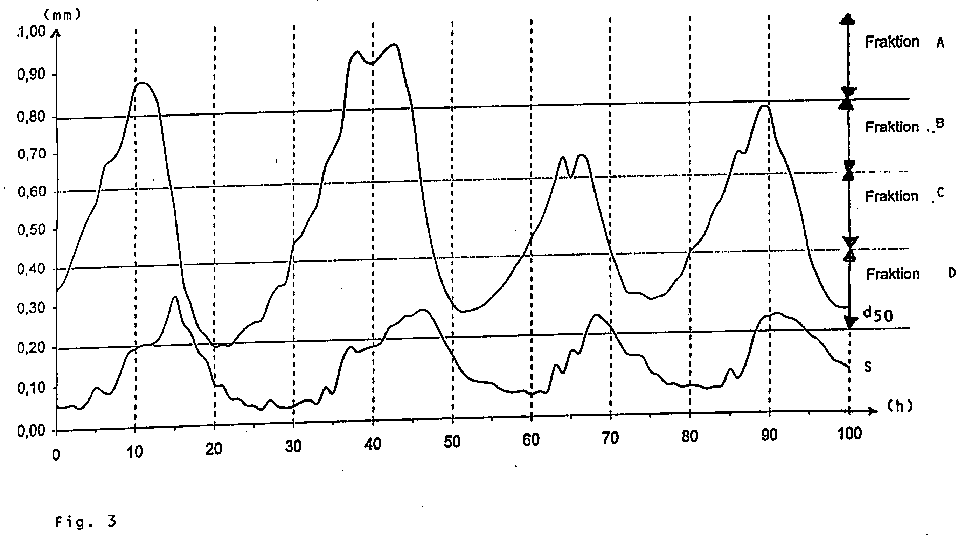

Die Figuren 2 und 3 zeigen die Korngrößenverteilung - Mittelkorn ($d_{50}$) und Standardabweichung (S) - in Abhängigkeit von der Betriebszeit. Die Abszisse gibt die Betriebszeit in Stunden (h), die Ordinate den Partikeldurchmesser und die Standardabweichung (S) in mm an. S ist definiert als Wurzel aus der Streuung (Varianz) der diskreten Zufallsgröße - Korndurchmesser :

$$S = \sqrt{(\Sigma(d_i - d_{50})^2 \cdot p_i},$$

wobei $d_i$ die zwei benachbarten Silben und $p_i$ den Messenanteil auf dem Sieb angibt. Figur 2 betrifft die Korngrößenverteilung, der beispielsgemäßen Granulation unter Verwendung von 6 Sichterrohren, entsprechend einem Flächenverhältnis f/F von 7,359 ‰. Figur 3 betrifft die gleiche Granulation mit dem einzigen Unterschied, daß nur ein Sichterrohr vorhanden war und demgemäß das Flächenverhältnis f/F 1,2265 ‰ betrug. Figur 3 zeigt die hier stark ausgeprägte periodische Oszillation des mittleren Korndurchmessers sowie der Streuung.

Ein weiterer Gegenstand richtet sich auf eine Vorrichtung zur Durchführung des Verfahrens. Diese Vorrichtung umfaßt eine mit Anströmboden, Sprühorganen, Vorrichtungen zum Zu- und Abführen des Fluidisierungsgases und einer oder mehrerer Austragsvorrichtungen ausgestattete Apparatur zur Wirbelschicht-Sprühgranulation und eine der/den Austragsvorrichtung/en nachgeschalteten Mehrwegweiche und ist derart dimensioniert und/oder mit Vorrichtungen zum pulsierenden Öffnen und Schließen der Austragsöffnungen ausgestattet, daß das Flächenverhältnis des Zeitintegrals der Austragsfläche aller Austragsvorrichtungen (f) zur Bodenfläche der Wirbelschichtapparatur (F) zwischen 5 ‰ und 0,5 ‰, insbesondere zwischen 3 ‰ und 0,5 ‰, liegt.

Vorzugsweise handelt es sich, wie auch in Figur 1 dargestellt, bei der Austragsvorrichtung um eine Gasstromsichtervorrichtung, deren Sichtergasmenge mittels einer Regelungsvorrichtung regelbar ist.

Die Vorteile des erfindungsgemäßen Verfahrens bestehen darin, daß in einfacher Weise quasi kontinuierlich fraktionierte Produktströme mit bedarfsgerechtem Kornspektrum direkt aus der Granulation erhalten werden. Damit erübrigen sich aufwendige Siebvorrichtungen und ein den kontinuierlichen Betrieb störendes Neueinstellen der Betriebsparameter für jede gewünschte Fraktion.

**Beispiele**

In einer Vorrichtung gemäß Figur 1 wurde granulatförmiges Natriumpercarbonat durch Versprühen einer wäßrigen Sodalösung und Wasserstoffperoxidlösung mittels Dreistoffdüsen hergestellt - die Anordnung der Düsen in dem rinnenförmigen Wirbelschichtreaktor, nämlich einander gegenüberliegend, sowie die wesentlichen Verfahrensbedingungen sind aus dem DE-Patent 195 14 187 bekannt. Die Anlagenparameter zur Ermittlung von f/F folgen aus der Tabelle, die Korngrößenverteilung aus den Figuren 2 und 3.

| | | |
|---|---|---|
| Fläche des Wirbelschichtbodens (F) | 6,4 m$^2$ | 6,4 m$^2$ |
| Öffnungsfläche eines Sichterrohres (f') | 0,00785 m$^2$ | 0,00785 m$^2$ |
| Anzahl Sichterrohre (n) | 6 | 1 |
| Flächenverhältnis f/F = n $\cdot$ f'/F | 7,359 ‰ | 1,2265 ‰ |
| Korngrößenverteilung $d_{50}$ und S | siehe Figur 2 | siehe Figur 3 |

**Patentansprüche**

1. Verfahren zur Herstellung von Granulat mit periodisch oszillierender Korngrößenverteilung,
   **dadurch gekennzeichnet,**
   daß man in einer Vorrichtung zur kontinuierlichen Wirbelschicht-Sprühgranulation Granulat erzeugt und dieses mittels einer oder mehreren klassierend wirkenden Austragsvorrichtungen bei einem eine periodische Oszillation der Korngrößenverteilung ermöglichenden Flächenverhältnis des Zeitintegrals der Austragsfläche (f) der einen oder mehreren Austragsvorrichtungen zur Bodenfläche der Wirbelschicht (F) austrägt.

2. Verfahren nach Anspruch 1,
   **dadurch gekennzeichnet,**
   daß man als Austragsvorrichtung einen oder mehrere Gegenstrom-Schwerkraft-Sichter verwendet, wobei die Austragsöffnungen ständig geöffnet sind oder pulsierend auf- und zugeschaltet werden.

3.  Verfahren nach Anspruch 1 oder 2,
dadurch gekennzeichnet,
daß man das während einer Periode aus der Wirbelschicht auszutragende Granulat bei stationärer mittlerer Verweilzeit in der Wirbelschicht in zwei oder mehr aufeinanderfolgende Fraktionen mit unterschiedlicher Korngrößenverteilung auftrennt.

4.  Verfahren nach Anspruch 3,
dadurch gekennzeichnet,
daß man als klassierend wirkende Austragsvorrichtung Sichterrohre verwendet, die Masse der Feststoffteilchen der Wirbelschicht über den Durchsatz an Sichtergas konstant hält und die Fraktionierung des ausgetragenen Granulats über den Sichtergasdurchsatz regelt.

5.  Verfahren nach einem der Ansprüche 1 bis 4,
dadurch gekennzeichnet,
daß man die Periodendauer durch Erhöhung des Durchsatzes an Granulat verkürzt.

6.  Verfahren nach einem der Ansprüche 1 bis 5,
dadurch gekennzeichnet,
daß man zur Erhöhung der Amplitudenschwankung zwischen dem maximalen und minimalen Korndurchmesser innerhalb einer Periode das Flächenverhältnis t/F reduziert.

7.  Verfahren nach einem der Ansprüche 1 bis 6,
dadurch gekennzeichnet,
daß man als Vorrichtung zur Wirbelschicht-Sprühgranulation eine Fließrinne oder nebeneinander liegende fließrinnenartige Module verwendet, wobei eine oder mehrere Vorrichtungen zum klassierenden Austrag im Endbereich der Rinne oder rinnenartigen Module angeordnet sind und das Flächenverhältnis f/F zwischen 5 ‰ und 0,1 ‰ (= $5 \cdot 10^{-3}$ bis $1 \cdot 10^{-4}$) liegt.

8.  Vorrichtung zur Durchführung des Verfahrens gemäß einem der Ansprüche 1 bis 7, umfassend eine mit Anströmboden (2), Sprühorganen (4), Vorrichtungen zum Zu- und Abführen des Fluidisierungsgases (5 und 6) und einer oder mehreren klassierend wirkende Austragsvorrichtungen (7), welche in geöffnetem Zustand gehalten oder pulsierend auf- und zugeschaltet werden können, ausgestattete Apparatur zur Wirbelschicht-Sprühgranulation (1) und eine der/den Austragsvorrichtung/en nachgeschaltete Mehrwegweiche (23),
dadurch gekennzeichnet,
daß das Flächenverhältnis des Zeitintegrals der Austragsfläche (f) aller Austragsvorrichtungen zur Bodenfläche der Wirbelschichtapparatur (F) zwischen 5 ‰ und 0,5 ‰, insbesondere zwischen 3 ‰ und 0,5 ‰, liegt.

9.  Vorrichtung nach Anspruch 8,
dadurch gekennzeichnet,
daß sie als Austragsvorrichtung eine Gasstromsichtervorrichtung (8) mit Vorrichtungen zur Regelung der Sichtergasmenge (18 mit 21) aufweist.

Fig. 1

Fig. 2

EP 0 832 683 A1

Fig. 3

EP 0 832 683 A1

## EUROPÄISCHER RECHERCHENBERICHT

**Europäisches Patentamt**

**Nummer der Anmeldung**

EP 97 11 4546

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 611 593 A (BAYER AG) <br> * Spalte 3, Zeile 44 - Spalte 7, Zeile 50; Abbildungen 1-5 * <br> --- | 1,2,5,6 | B01J2/16 <br> B01J8/24 |
| X | US 3 880 968 A (KASPAR JAN ET AL) <br> * Spalte 2, Zeile 15 - Spalte 3, Zeile 40 * <br><br> * Spalte 4, Zeile 15 - Spalte 5, Zeile 56; Abbildung 1; Beispiele 1,2 * <br> --- | 1,2,5,6 | |
| A | DE 31 19 968 A (KALI & SALZ AG ;BASF AG (DE)) <br> * Seite 14, Zeile 7 - Zeile 20 * <br> * Seite 15, Zeile 17 - Zeile 28; Abbildungen 1,4 * <br> --- | 1,2,5,6 | |
| D,A | DE 195 14 187 C (DEGUSSA) <br> * das ganze Dokument * <br> ----- | 1-9 | |

**RECHERCHIERTE SACHGEBIETE (Int.Cl.6)**

B01J

Der vorliegende Recherchenbericht wurde für alle Patentansprüche erstellt

| Recherchenort | Abschlußdatum der Recherche | Prüfer |
|---|---|---|
| BERLIN | 9.Januar 1998 | Cubas Alcaraz, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)